# EUROPEAN PATENT APPLICATION

(11) **EP 0 982 914 A2**
(43) Date of publication of application: **01.03.2000**
(21) Application number: 99116901.2
(22) Date of filing: 26.08.1999
(51) Int. Cl.: H04M 1/82, H04M 1/60, H04M 1/725

(54) **A telephone linked with an external audio set**

(30) Priority: 28.08.1998 KR 9835036
(71) Applicant: Altotech Co., Ltd, Bucheon-shi Kyunggi-do (KR)
(72) Inventor: Young, Soo Han, Bucheon-shi, Kyunggi-do (KR)
(74) Representative: Viering, Jentschura & Partner

(57) **Abstract**

The present invention is about a telephone in which an input/output device that can be connected to an external audio set is attached so that in addition to typical telephone function, listening to an audio or transmitting the voice of a user to the external audio set are possible through a mic-receiver of a telephone. In the present invention, a signal line of an external audio set is connected to the main body of the telephone however, a selection switch is installed to select the audio signal by switching from the voice signal of the telephone and the voice signal of the telephone is transmitted from the headphone type mic-receiver. One can use the telephone of the present invention conveniently as he or she can listen to an audio or use the telephone just by selecting the desired function while wearing the headphone type mic-receiver.

## Description

### Background Of The Invention

### 1. Field Of The Invention

The present invention relates to a telephone, and more particularly to a hands-free telephone in which input and output device enabling a telephone to be linked to an external audio set is attached so that not only calls can be made through the mic-receiver(receiver with microphone) of the telephone but also listening to an external audio can be done and voice of the speaker can be transmitted to the external audio set through the mic-receiver of the telephone.

### 2. Description Of The Background Art

In general, there is problem of inconvenience when a phone rings while listening to an audio like music, language learning program or broadcasting transmitted from audio devices such as music center, radio, cassette tape recorder, external amplifier, CD player or computer music player through a headphone because, in order to answer the phone, one has to take off the headphone and answer the phone by picking up the mic-receiver of the telephone. Then once the telephone conversation is over one has to put on the headphone again to carry on listening to the audio. This was typical of the conventional telephone whether it was a wireless phone or not, the telephone was not in any way connected to the external audio set so it could only function as a telephone itself.

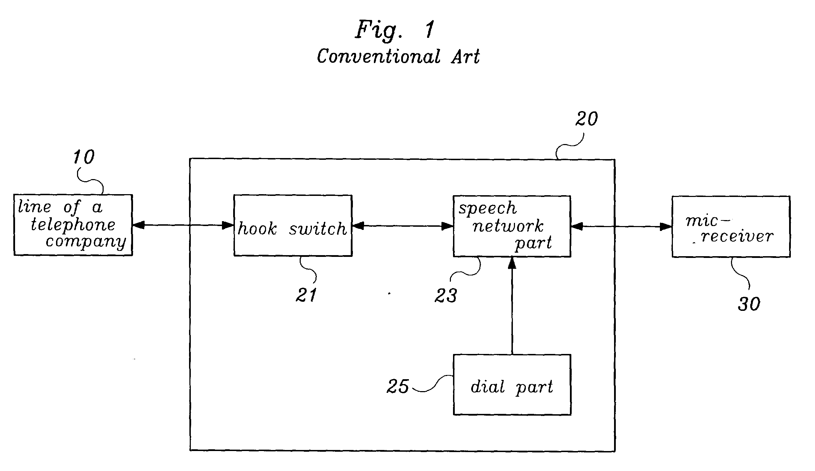

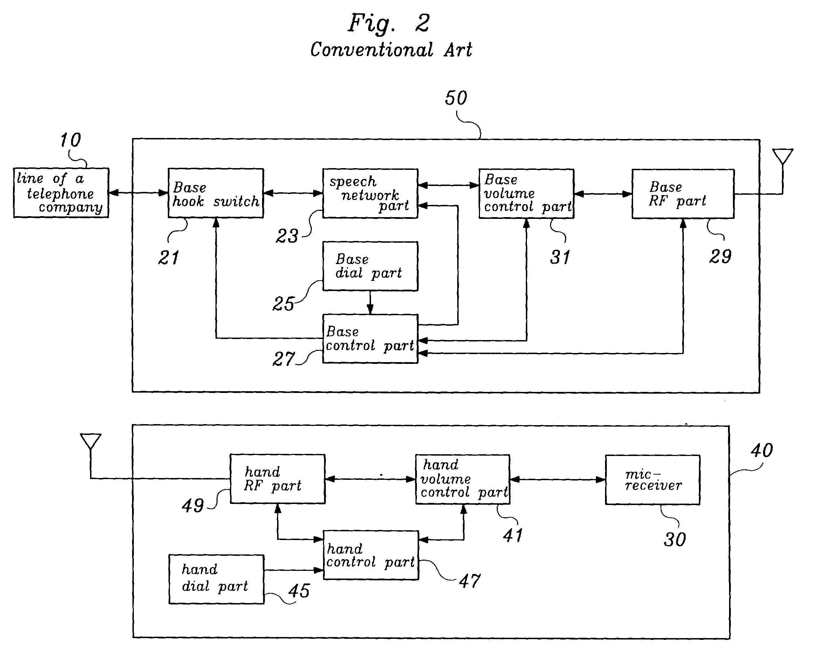

As shown in Fig. 1, the conventional wired telephone comprises a main body 20 which is connected to a line of the telephone company 10 and a mic-receiver 30 which is connected to the main body 20 and receives and transmits voice signals. The main body 20 comprises a hook switch 21 which selects the connection of a line of a telephone company, a dial part 25 where telephone numbers are inputted and a speech network part 23 which processes voice signals of the telephone and transmits dialing signals. Fig. 2 shows a structure of the conventional wireless phone which comprises a base set 50 which is connected to a line of a telephone company 10 and transmits voice signals of the telephone in a wireless way and a handset 40 which receives and transmits the wireless signals. The base set 50 of the wireless phone comprises a base hook switch 21 which can block a phone signal or connect a phone signal transmitted through a line of a telephone company 10, a speech network part 23 which processes voice signal of a telephone, a base volume control part 31 which controls the volume of a voice, a base RF part 29 which receives and transmits voice signals into RF signals, a base control part 27 which controls the function of the base RF part and a base dial part 25 which conducts dialing of the telephone. The handset 40 comprises a hand RF part 49 which receives and transmits RF signals of the base set 50, a hand volume control part 41 which controls the volume of the voice, a hand control part 47 which controls the function of the hand volume part and a hand dial part 45 which conducts dialing of the telephone. Input and output of the voice is done through a mic-receiver 30.

As these conventional telephones did not have any kind of method which connected them to an external audio set, the conventional telephone could only carry out its typical function of calling and answering. So if a phone rings while listening to an audio through a headphone, it is inconvenient as one has to take off the headphone to answer the phone by lifting up the handset and put on the headphone again after the telephone conversation is finished to carry on with the prior activity. Furthermore there is a chance that one could not answer the phone if unfortunately he or she did not hear the phone ringing.

### Summary Of the Invention

Present invention enables to block the connection to an external audio set and answer a phone call through a mic-receiver of the conventional wired or wireless telephone while listening to music, language learning program or broadcasting by operating automatically through a software or manually through a switching operation of hardware. The present invention is carried out as a signal line of an audio set is connected to the main body of a telephone however, a selecting switch is installed to select the audio signal by a voice signal through a line of a telephone company and a switching and the voice signal of a telephone is outputted through a mic-receiver. During the operation of an external audio set, if a user puts on a headphone type mic-receiver(or head-set) which is connected to a mic-receiver part and selects an external audio set by using a selecting switch, he or she can listen to all kinds of music or languages and also he or she can broadcast a program by transmitting his or her voice through the external audio set. If a phone rings, user can operate automatically through a software or manually by operating a switch through a hardware and carry on with a telephone conversation through a head-set. In other words, a user can select from an audio function of an external audio set and a telephone function while wearing a head-set according to his or her need so, it is convenient to use in a working environment.

### Brief Description Of The Attached Drawings

Fig. 1 is a circuit diagram showing a structure of a wired telephone according to the conventional art.
Fig. 2 is a circuit diagram showing a structure of a wireless telephone according to the conventional art.
Fig. 3 is a circuit diagram showing a structure of a wired telephone according to the present invention.
Fig. 4 is a circuit diagram showing a structure of a portable handset of a wireless telephone according to the present invention.
Fig. 5 is a circuit diagram showing a structure of a wireless telephone according to the present invention.

### Detailed Description Of The Present Invention

The present invention of a telephone linked to an external audio set includes a hook switch which is connected to a line of a telephone company, an input part which can input and output a audio signal from external sound base and a selecting switch connected to a output part which can select at least one from the line of a telephone company, an external input and external output. The present invention is applicable to both wired and wireless phones of all the conventional type telephones and in the following preferred embodiments, the present invention applied to each of the wired and wireless telephone will be provided in detail in order to help understanding of the invention.

### Preferred Embodiment 1

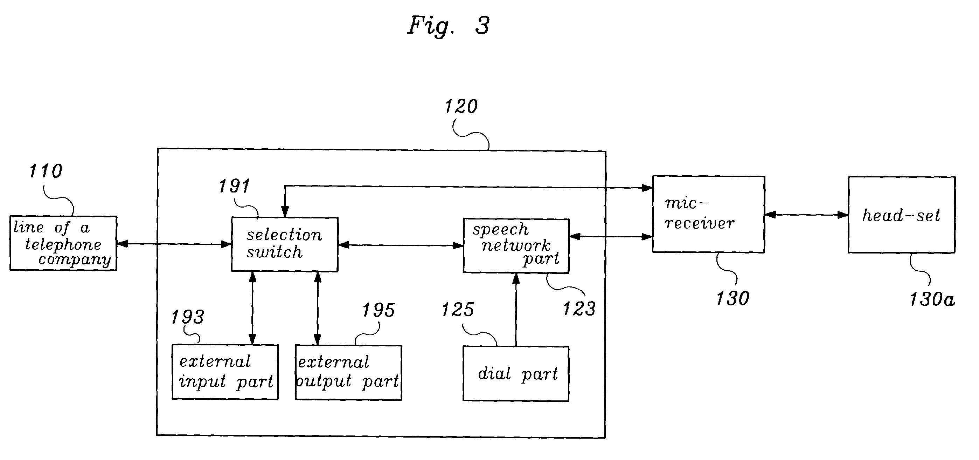

Fig. 3 shows a structure of a wired telephone according to the present invention. An external input part 193 connected to an external audio set which enables to input audio signal and an external output part 195 connected to an external audio set which enables to output voice of a user to an external device are installed in a main body 120. In addition, selection switch 191 which selects audio signal inputted through the external input part 193 and voice inputted through a line of a telephone company 110 and which can decide to output a voice of the user to an external device is installed in the main body. The selection switch 193 must be structured to operate selectively from a function of selecting audio signal of the external input part 193 and applying to a mic-receiver 130 or a function of applying a voice signal of the user to the external output part 195 through the mic-receiver 130 along with the function of hook switch of a telephone. The line of a telephone company 110 makes voice signal of a telephone and dial signal to be received and transmitted through a line connected to a telephone company and the external input part 193 connected to an audio set makes audio signals outputted from an audio set to be applied to the selection switch 191 of the main body 120. Under normal circumstances, the selection switch 191 applies audio signals inputted through the external input part 193 to the mic-receiver 130 and in case a user selects to make or answer a call, the selection switch blocks the input of an audio signal and instead selects the sound signal of the telephone which is inputted through a line of a telephone company 110 and applies it to the speech network part 123. If the selection switch selects the external output, the voice signal of the user collected at the mic-receiver 130 is transmitted to an externally connected audio set. The speech network part 123 and the dial part 125 have the same structure as that of the conventional telephones. A head-set 130, one kind of the mic-receiver, including a headphone set transmits the audio signal from the main body 120 to the speaker of the headphone set and, transmits the voice signal of the user collected at the microphone to the main body 120.

With a wired telephone structured as described above, user can listen to audio sounds transmitted from an audio set which is externally connected to the telephone through the head-set 130 as the audio signal transmitted from an external audio set is transmitted through the external input part 193 and the selection switch 191 and outputted through the speaker of the head-set 130 under the circumstance that external input function is selected while the external audio set is operating. If a user needs to answer or make a phone call during his or her prior activity of listening to audio signals, he or she may use the telephone simply by switching the selection switch 191 into a telephone operating mode.

Under the circumstance of using a hardware method, when a user switches into a telephone operating mode from audio listening mode, the audio signal inputted through the external input part 193 is blocked and instead a line of a telephone company 110 is connected which allows the user have a telephone conversation through the headphone type handset 130. In case a telephone rings under the circumstance of using a software method, the hook function operates automatically and allows the user to answer the phone. It is better to use an electric switch like a transistor switch for the hook switch than other types of switches so that selecting one mode from the other is done as on/off with an electric signal of the soft ware.

When a user needs to make a phone call, he or she can do it by switching the selection switch 191 into a telephone operating mode and dial the numbers using the dial part 125 after the dial tone is heard. That is to say, a user does not need to stop his or her activity of listening to an audio whenever a need to make or receive a call arises, instead just by switching the selection switch 191 into a telephone operating mode the user can use the telephone. In particular, when using a software method for switching of the selection switch, the switching is made automatically and connects to a line of a telephone company 110 whenever the phone rings which is convenient to the user. He or she can carry on with listening to the audio after finishing the call by manually switching the selection switch 191 so that the connection with a line of a telephone company 110 is blocked or when using the software method for switching, the connection with a line of a telephone company 110 is automatically blocked when the dial tone is detected.

### Preferred Embodiment 2

In this preferred embodiment, the technical spirit of the present invention is applied to a wireless telephone which is more portable than a wired telephone, the detailed illustration of this application of the present invention is given hereinafter.

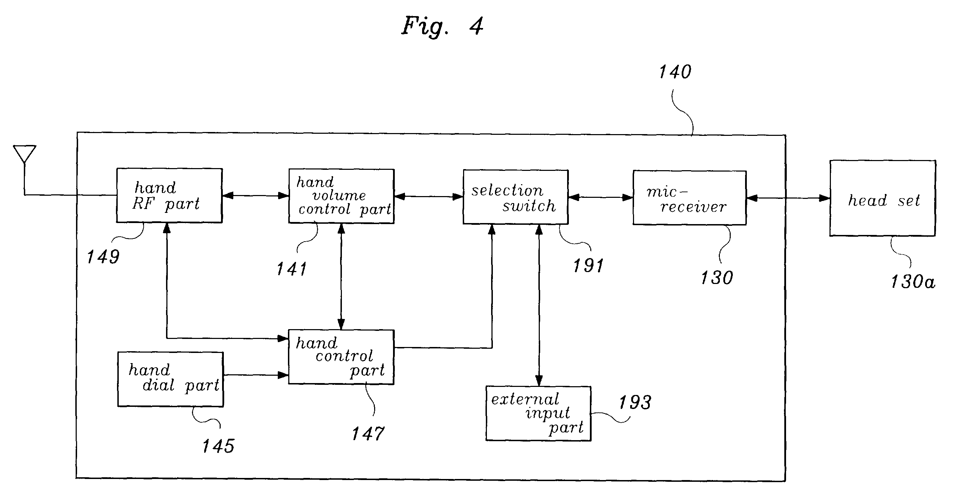

In general, a wireless telephone comprises a base-set which is not portable and a hand-set which is portable. First, the application of the present invention to the portable part (hand-set) will be given in the followings. Fig. 4 shows a structure of a portable part(hand-set) when the present invention is applied. A handset 140 of a wireless telephone of the present invention comprises a hand RF part 149 which transmits wireless communication with a base set, a hand volume control part 141 which receives and transmits voice signal with the hand RF part 149, a hand dial part 145 in which a user selects a function and a hand control part 147 which carries out the function a user has selected. A selection switch 191 is installed between the hand volume control part 141 and the handset 130 and the external input part 193 is connected to the selection switch 191. There is no difference in the structure of the base-set between that of the present invention and the conventional ones. A user carries the portable part(hand-set) 140 which has the above mentioned structure and a miniature audio set and when an output part of an audio set is connected the external input part 193 of the hand-set 140, the user can listen to the audio as an audio signal of the audio set which is inputted through the external input part 193 is outputted through a speaker of the head-set 130a which is connected to the mic-receiver 130 passing along the selection switch 191. When a user needs to make or answer a phone call during his or her activity of listening to an audio, he or she can do so by switching the selection switch 191 into a telephone operating mode. Then the audio sound inputted through the external input part 193 is blocked and allows the user to use the phone through the head-set 130a which is connected to the mic-receiver 130 by connecting to the base-set 150. When it is a case of answering a phone call, hook switch is turned on so that one can answer the call instantly and when it is a case of making a call, operate the selection switch into a desired mode and once the dial tone is heard, one dial the number by using the hand dial part 145.

So, when a user needs to make or answer a phone call during his or her activity of listening to an audio, there is no need to turn off the audio and pick up the handset (portable part) to use the telephone. Instead, just by operating the selection switch 191 attached on the portable part(hand-set) 140 manually or automatically, he or she can answer or make a call and once the call is finished the user can continue his or her prior activity of listening to the audio by switching back the selection switch.

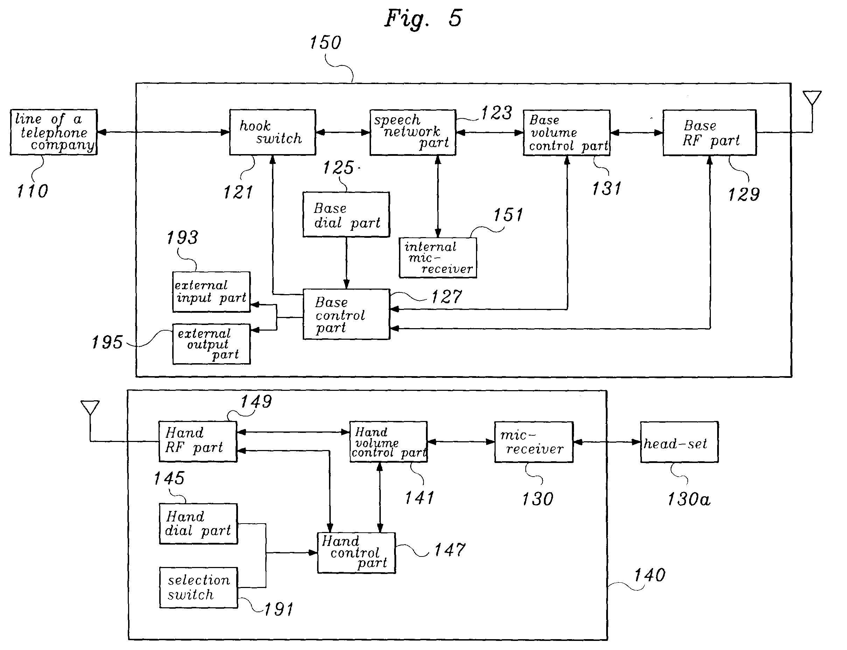

Next, application of the present invention in which an external audio set is connected to the base set is given as shown in Fig. 5. In case of connecting an external audio set to the base-set, not only externally inputting audio set can be connected but also externally outputting audio set can be connected so, the function of a telephone can be various. A base-set 150 comprises a hook switch 121 which is connected to a line of a telephone company 110 and connects or blocks a telephone signal, a speech net work part 123 which is connected to the hook switch 121 and receives and transmits voice signal, a base volume control part 131 which is connected to the speech net work part 123, a base RF part 129 which is connected to the volume control part 131 and communicates with the portable part(hand-set) 140, a speaker(or internal) type mic-receiver 151 which is connected to the speech net work part 123 and allows to make or answer a call directly with the base-set 150, a base control part 127 which controls functions of the base-set 150 and a base dial part 125 in which a user selects a function. The base-set 150 further comprises an external input part 193 which is connected to the base control part 127 and in which different kinds of audio signals from external sound bases are inputted and an external output part 195 which outputs voice data of a telephone form external sound bases. A hand-set 140 comprises a hand RF part 149 which receives and transmits audio information with the base-set 150, a hand volume control part 141 which controls volume data received and transmitted through the RF part 149, a mic-receiver 130 which is connected to the hand volume control part 141, a hand control part 147 which controls different kinds of function of the handset 140 and a hand dial part 145 in which call could be made or select a function of the handset 140. A head-set 130a can be connected to the mic-receiver 130 of the hand-set 140 in parallel or in series in order to provide convenience of carrying. In particular, the handset 140 comprises a function of making or answering a call through a line of a telephone company 110 and a selection switch 191 which can select between a function of listening to a sound inputted through the external input part 193 and a function of transmitting a voice of a user to an external device through the external output part 195.

An audio set is connected to the external input part 193 of the base set 150 and a user carries the portable part(hand-set) 140 and wears the head-set 130a. During the operation of the audio set, select a function external input at the selection switch 191 of the handset 140 then an audio signal inputted through the external input part 193 of the base set 150 passes along the base control part 127 and base volume control part 131 and finally transmitted in a wireless manner from the base RF part 129. The transmitted audio signal is received at the hand RF part 149 of the handset 140 and outputted through a speaker of the mic-receiver 130. On the other hand, connect the audio set to the external output part 195 of the base-set 150 and select a function of external output at the selection switch 191 of the handset 140. Then, voice data of a user received through the mic-receiver 130 of handset 140 passes along the hand control part 147 and the hand volume control part 141 and finally transmitted from the hand RF part 149. The transmitted voice signal data is received at the base RF part 129 of the base-set 150 and outputted to an external audio set through the external output part 195. In this manner, a user can communicate with other users through broadcastings aired in offices which are connected to external audio sets.

When a user needs to make or answer a call during his or her activity of listening to an audio or communicating with others through external audio sets, a user can switch the selection switch 191 manually or automatically so that the control part 127 of the base-set 150 would carry out the telephone operating mode. In a hardware method, a user personally operates the selection switch 191 so that transmission of audio signals is blocked and a function of wireless telephone is carried out. In a software method, transmission of audio signals is blocked automatically by the program of the control part 147 and the program connects to a line of a telephone company when a phone rings. It is better to use an electric switch like a transistor switch for the hook switch 121 than other types of switches so that switching from telephone operating mode to the external input/output mode or vice versa is done by the signal of the control part 127. In other words, when a need to answer or make a call arises while listening to an audio or communicating with others through the external audio set device, there is no need to stop the current activity and pickup the handset to use the telephone instead through a program of the control part one can easily use the telephone. Once the call is finished one can go back to his or her prior activity of listening to an audio or communicating with others by switching the selection switch into an external input/output mode manually in a hardware method. In a software method, the switching is done automatically once the dialing tone is detected so that the function of a wireless phone is blocked and the external input/output mode is turned on.

The present invention allows to engage in both activities of listening to an audio and answering or making a call with a telephone by connecting a telephone with an external audio set that allows to input and output audio signals. A user can easily switch from telephone operating mode to audio listening mode and vice versa by a simple operation of the selection switch. In this way, inconvenience of using a separate telephone during his or her activity of listening to an audio or broadcasting is eliminated and instead provides convenience to users for one can use telephone while engaged in other activities.

## Claims

1. A telephone comprising:
an input part which receives audio signals from an external sound base device;
an output part which transmits audio signals to the external sound base device; and
a selection switch which can select at least one from a line of a telephone company, the input part and the output part, and connect to the selected one to a mic-receiver of the telephone.

2. A telephone in which a main body is connected to a line of a telephone company and a mic-receiver is connected to the main body with a wire, which comprises:
an input part included in the main body which receives audio signals transmitted from an external audio set; and
a selection switch which selects at least one from the line of a telephone company and the input part, and transmits a selected signal between a telephone signal of the line of a telephone company and an input signal of the external audio set to the mic-receiver.

3. A telephone according to claim 2, further comprising an output part connected to the selection switch, and output a voice signal of a user received through the mic-receiver to an external audio set passing along the selection switch.

4. A telephone comprising a base set connected to a line of a telephone company and a handset in which a wireless communication is possible with the base set, wherein
the base set includes an input part which receives audio signals outputted from an external audio set and a control part connected to the line of a telephone company and the input part which can select at least one between a telephone signal of the line of a telephone company and an audio input signal of the external audio set, and
the handset includes a selection switch which can select at least one from the telephone signal and the audio input signal by controlling the control part using a wireless signal communicated with the base set.

5. A telephone according to claim 4, wherein
the base set further includes an output part which can output a voice signal to the external audio set through the control part, and
the handset further includes an selection switch which can select an output of a voice signal through the output part by control the control part using the wireless signal communicated with the base set.

6. A telephone comprising a base set which is connected to a line of a telephone company and a handset in which a wireless transmission is possible with the base set, which comprises:
the handset including an input part in which audio signals outputted from an external audio set is inputted; and
a selection switch which can select between a telephone signal of the line of a telephone company and an audio input signal of the external audio set which are received through a wireless signal communicated with the base set.
